# FASCICULE DE BREVET EUROPEEN

(11) **EP 0 433 108 B1**
(45) Date de publication et mention de la délivrance du brevet: **27.10.1993**
(21) Numéro de dépôt: 90403213.3
(22) Date de dépôt: 13.11.1990
(51) Int. Cl.: G01N 3/18, G01N 3/20, F27D 3/00, F27B 17/02, G01B 5/00

(54) **Procédé et dispositif de mise en place d'une éprouvette dans un four et four comportant un tel dispositif**
Verfahren und Vorrichtung zur Anordnung einer Probe in einem Ofen und Ofen mit solcher Vorrichtung
Process and device to position a probe in a furnace and furnace with such a device

(30) Priorité: 12.12.1989 FR 8916414
(43) Date de publication de la demande: 19.06.1991
(73) Titulaire: AEROSPATIALE Société Nationale Industrielle, 75781 Paris Cédex 16 (FR)
(72) Inventeur: Cussac, Michel, F-33260 La Teste (FR); Lequertier, Jean-Michel, F-33160 St. Aubin-du-Médoc (FR)
(74) Mandataire: Phélip, Bruno

(56) Documents cités:
- US-A- 3 323 356
- PATENT ABSTRACTS OF JAPAN, vol. 10, no. 68 (P-437)[2125], 18 mars 1986; & JP-A-60 207 035

## Description

L'invention est relative à un procédé et un dispositif de mise en place d'une éprouvette dans un four, à haute température. L'invention est aussi relative à un four à haute température, associé au dispositif précité.

Le document JP 60-207035 décrit un four à haute température comprenant une chambre tubulaire dans laquelle est disposée, lors des essais, une éprouvette, et qui est entourée des éléments de chauffage du four. La chambre tubulaire est divisée en deux moitiés dans un plan transversal par rapport à l'axe de rotation de la chambre. Pour charger l'éprouvette dans le four, les deux moitiés de la chambre sont éloignées l'une de l'autre.

Le document US 3,323,356 décrit un four tubulaire à haute température qui est chargé avec une éprouvette soit après démontage d'une paroi arrière du four, soit par une trappe disposée au fond du four.

De tels fours ne sont pas de manipulation aisée, surtout lorsque les essais doivent être répétés à cadence rapide.

Plus particulièrement, l'invention concerne un procédé et un dispositif de mise en place d'une éprouvette dans un four renfermant un outillage d'essai comprenant un support d'éprouvette et des moyens complémentaires destinés à agir mécaniquement sur une éprouvette en place sur ledit support, et dont une paroi latérale est traversée dans son épaisseur par un canal débouchant à l'intérieur du four sensiblement au niveau de la zone d'essai.

De tels fours sont déjà connus et utilisés dans le cadre d'essais à haute température pour évaluer des propriétés mécaniques de matériaux, et notamment dans le cadre d'essais en flexion trois points, à 1500°C et en ambiance oxydante (air à 10⁵ pascals) sur des éprouvettes parallélépipédiques allongées en matériaux céramiques ou composites carbone-carbone protégés contre l'oxydation. On utilise, en effet, dans le cadre de tels essais, des fours tubulaires sans porte, dont la paroi latérale est traversée par deux canaux de visée diamétralement opposés et associés l'un à un extensométre optique, l'autre à une lampe extensométrique, ce dispositif extensométrique permettant d'observer la zone d'essai dans le four et de mesurer la déformation des éprouvettes au cours des essais.

Cependant, les cadences d'essai actuelles sont de l'ordre d'un essai par jour, ce qui est relativement faible. La mise en place d'une éprouvette sur le support d'essai nécessite, en effet, pour qu'un opérateur puisse accéder audit support, que le four soit soulevé par rapport à l'outillage d'essai. Or, pour ne pas détériorer les résistances chauffantes du four, le déplacement de celui-ci ne peut se faire qu'à froid. L'opérateur est donc obligé d'attendre, entre chaque essai,le refroidissement du four, ce qui est incompatible avec une cadence d'essai élevée.

Un but de l'invention est donc de proposer un procédé de mise en place d'éprouvettes dans un four du type précité et un dispositif permettant la mise en oeuvre de ce procédé,grâce auxquels il est possible, pour un opérateur ,d'accéder au support d'éprouvette entre deux essais sans avoir à déplacer le four,et donc sans avoir à attendre le refroidissement de celui-ci,qui peut ainsi être de préférence maintenu en température entre des essais consécutifs , ce qui est doublement avantageux sur le plan de la consommation énergétique comme sur celui de la cadence des essais.

L'invention propose notamment d'utiliser, pour introduire une éprouvette dans le four et la déposer sur son support entre deux essais, le canal dont est muni ledit four, et en particulier, lorsque le four est muni d'un dispositif extensométrique , l'un des deux canaux associés audit dispositif extensométrique.

En outre, lorsque l'axe du canal utilisé n'est pas parallèle à la direction selon laquelle l'éprouvette s'étend en place sur le support à l'intérieur du four, ce qui est le cas pour les canaux de visée des dispositifs extensométriques, qui permettent d'observer une éprouvette sur son support perpendiculairement à sa direction longitudinale , et que, de plus la longueur de l'éprouvette est supérieure à la largeur du canal ,l'invention propose aussi un dispositif permettant de pivoter une éprouvette à l'intérieur du four,avant de la positionner sur son support . Ceci est plus particulièrement obtenu, selon l'invention, grâce à un dispositif mécanique conférant à ladite éprouvette un mouvement de pivotement selon une cinématique simple.

Il est encore à noter que le procédé et le dispositif proposés par l'invention permettent de diminuer considérablement les coûts énergétiques des essais actuels, sans pour autant nécessiter de changement important sur les caractéristiques et la définition des fours utilisés.

La présente invention a donc pour objet un procédé de mise en place d'une éprouvette dans un four à haute température renfermant un outillage d'essai comprenant un support d'éprouvette et des moyens complémentaires destinés à agir mécaniquement sur une éprouvette posée sur ledit support, une paroi latérale dudit four étant traversée dans son épaisseur par un canal débouchant à l'intérieur dudit four au niveau de la zone d'essai, ce procédé étant caractérisé en ce que, après une mise en température du four, on effectue, la succession des étapes suivantes:
- introduction d'une éprouvette à l'intérieur du four par ledit canal à l'aide de moyens porteurs ;
- dépose de ladite éprouvette sur le support d'éprouvette ;
- retrait des moyens porteurs de l'intérieur du four par ledit canal .

Avantageusement, dans le cas où le four comporte un canal de visée associé à des moyens optiques d'observation,l'éprouvette est introduite dans le four par ledit canal de visée et est pivotée à l'intérieur dudit four , lesdits moyens optiques étant ensuite positionnés devant l'ouverture extérieure dudit canal de visée, après retrait des moyens porteurs hors de celui-ci . .L'éprouvette peut notamment être pivotée pendant son déplacement à l'intérieur du four vers son support .

L'invention a aussi pour objet un dispositif de mise en place d'une éprouvette dans un four à haute température renfermant un outillage d'essai comprenant un support d'éprouvette et des moyens complémentaires destinés à agir mécaniquement sur une éprouvette en place sur ledit support, une paroi latérale dudit four étant traversée dans son épaisseur par un canal débouchant à l'intérieur dudit four sensiblement au niveau de la zone d'essai, pour la mise en oeuvre du procédé précité, ce dispositif comportant une tige mobile de dépose d'éprouvettes munie à une de ses extrémités de moyens porteurs propres à recevoir une éprouvette et à la maintenir en place sur ladite tige dans une position de déplacement, où ladite éprouvette s'étend sensiblement selon la direction longitudinale de ladite tige, la dite tige de dépose étant de dimension telle qu'elle peut être introduite, avec une éprouvette en position de déplacement , dans le canal, pour transporter ladite éprouvette de l'extérieur vers l'intérieur du four .

Avantageusement, pour un four dans lequel l'axe du canal et la direction selon laquelle une éprouvette s'étend en position déposée sur le support ne sont pas parallèles,le dispositif comporte des moyens de positionnement d'une éprouvette sur le support , lesdits moyens coopérant avec les moyens porteurs pour faire pivoter automatiquement , à l'intérieur du four,une éprouvette de sa position de déplacement à sa position déposée . Les moyens porteurs comportent un élément de dépose monté pivotant à l'extrémité de la tige mobile et propre à recevoir une éprouvette, ledit élément coopérant à l'intérieur du four avec un rail de guidage l'entraînant en pivotement lors de l'avancée de la tige mobile à l'intérieur dudit four . Ce rail de guidage est une rainure ménagée sur le support d'éprouvette , l'élément de dépose comportant un éperon destiné à s'engager dans ladite rainure. Ledit éperon est, en position de déplacement dans le canal, disposé sur le côté de la tige mobile, en regard d'une paroi d'outillage d'essai contre laquelle il vient buter avant de se positionner par pivotement en regard de la rainure, faisant ainsi pivoter l'élément de dépose . L'éperon peut être en saillie par rapport à l'élément de dépose à la fois latéralement et dans une direction parallèle à la direction de l'axe de pivotement dudit élément. Il s'escamote alors, à l'entrée dans la rainure , dans un évidement ménagé dans la tige mobile. Les moyens de positionnement peuvent comprendre également des moyens de translation du support d'éprouvette pour modifier la position dudit support par rapport à l'axe du canal.La tige mobile et/ou les moyens porteurs peuvent être en céramique et/ou en alumine.

De façon préférentielle, dans le cas où le four est associé à des moyens optiques d'observation , le canal dans lequel se déplace la tige mobile sert de canal de visée . Notamment,si ces moyens optiques comportent une lampe destinée à éclairer de l'extérieur du four la zone d'essai, l'éclairage se fait par l'intermédiaire dudit canal .

De façon avantageuse encore , la tige mobile est actionnée par un dispositif de manoeuvre monté sur un support permettant son positionnement en regard du canal . Le support de ce dispositif de manoeuvre peut également porter un support de lampe . La lampe, son support et le dispositif de manoeuvre peuvent être montés pivotant sur un bras, de sorte que leur déplacement permet d'écarter ladite lampe de l'ouverture extérieure du canal pour y introduire la tige mobile .Le dispositif de manoeuvre peut comporter un système vis-écrou actionnant en translation la tige mobile . Le dispositif de manoeuvre peut notamment comporter un palier mobile auquel est reliée la tige mobile , ce palier mobile étant solidaire d'un écrou de manoeuvre dont le filetage coopère avec le filetage d'une vis de manoeuvre tourillonnée entre deux paliers fixes sur une plaque support du dispositif de manoeuvre et, dont la rotation commande la translation de l'écrou et du palier mobile guidé le long d'au moins une colonne fixe sur la plaque support et parallèle à la vis. La rotation de la vis de manoeuvre peut notamment être commandée par un volant de manoeuvre.

De façon préférentielle , encore , le palier mobile est solidarisé à un axe de transfert s'étendant du côté dudit palier mobile destiné à être le plus proche du four, la tige mobile étant montée en bout dudit axe de transfert et dans son prolongement, sur l'extrémité de celui-ci la plus éloignée dudit palier. La tige mobile peut être emboîtée à son extrémité opposée au moyen porteur dans un fourreau terminant l'axe de transfert. L'axe de transfert peut déboucher , au-delà du palier fixe destiné à être le plus proche du four,dans une gaine de protection à l'intérieur de laquelle est rangée la tige mobile en position de repos .

Un autre objet de l'invention est un four à haute température, équipé d'un outillage d'essai, et dont la paroi latérale présente au moins un canal débouchant à l'intérieur du four, ledit four étant associé à un tel dispositif de mise en place , et notamment un four tubulaire . En particulier, l'outillage d'essai de ce four peut être un outillage pour tester une éprouvette en flexion trois points.

La description qui va suivre est donnée à titre d'exemple . Elle doit être lue à l'aide des dessins annexés.

Sur ces dessins:
la figure 1 est une représentation schématique d'un four d'essai dans lequel une éprouvette est destinée à être mise en place à l'aide d'un procédé et d'un dispositif conformes à l'invention ;
la figure 2 est une vue schématique du four de la figure 1 et d'un dispositif de mise en place conforme à l'invention, selon la flèche F de la figure 3;
la figure 3 est une vue selon la ligne III-III de la figure 2 ;
la figure 4 est une vue de dessus du dispositif de mise en place de la figure 2;
la figure 5 est une vue en coupe avec arraché selon la ligne V-V de la figure 4;
la figure 6 ,est une vue en coupe selon la ligne VI-VI de la figure 4 et
la figure 7 est une vue en coupe selon la ligne VII-VII de la figure 4.

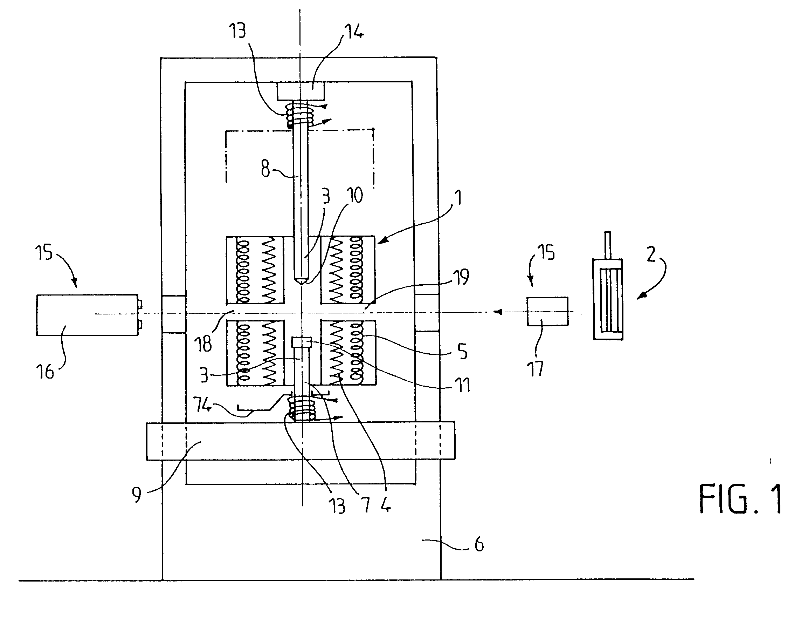

On a représenté sur les figures 1 à 3 , un appareillage d'essai d'éprouvettes en flexion trois points et à haute température . Cet appareillage comporte essentiellement un four tubulaire 1 et un dispositif 2 de mise en place d'éprouvettes parallélépipédiques allongées Eₚ.

Ce four 1 est un four à haute température (1500°C) à l'intérieur duquel est disposé un outillage 3 de flexion trois points, réalisé en alumine. Ce four 1 a un diamètre intérieur de 120 mm . Il est muni, de façon classique, d'une part, de résistances 4 chauffant son volume intérieur et, d'autre part, d'éléments 5 de refroidissement de sa surface externe . Ces résistances 4 et ces éléments de refroidissement 5 sont disposés radialement à l'intérieur des parois du four 1.

Le four 1 et l'outillage 3 sont montés sur un bâti 6 posé sur le sol . L'outillage 3 comporte deux poutres de transmission d'effort 7 et 8 disposées en regard l'une de l'autre sur un axe sensiblement vertical . La poutre 7, qui est celle des deux poutres qui est la plus proche du fond de la base du du bâti 6 , est montée sur une traverse mobile 9, qui est perpendiculaire à ladite poutre 7 , et qui est translatable, par rapport audit bâti 6 , selon la direction axiale des poutres. La poutre 8 est , quant à elle , montée sur un capteur d'effort 14 solidaire du haut dudit bâti 6.

Ces deux poutres 7 et 8 sont chacune plongées, au niveau de leur extrémité libre en regard, à l'intérieur du four 3.La poutre 8 est terminée à son extrémité libre par un poinçon 10 , dont la pointe est destinée à appuyer , lors d'un essai,sur la partie médiane d'une éprouvette Eₚ testée. La poutre 7 est coiffée, quant à elle, à son extrémité libre , par un support 11 pour éprouvettes Eₚ, sur lequel sont disposées parallèlement et symétriquement par rapport à l'axe du poinçon 10 et des poutres 7 et 8, deux billettes cylindriques 12 destinées à porter les éprouvettes Eₚ au niveau de leurs extrémités longitudinales . La poutre 7, montée sur la traverse mobile 9, sert de piston de transmission d'effort . Ces deux poutres 7 et 8 sont toutes deux associées, à leur extrémité opposée à leur extrémité libre, à des éléments de refroidissement 13.

Les indications recueillies par le capteur d'effort 14 sont complétées par celles obtenues à l'aide d'un dispositif extensométrique 15 observant la déformation des éprouvettes Eₚ testées.Ce dispositif extensométrique 15 comporte essentiellement un extensométre 16 et une lampe 17 disposés à l'extérieur du bâti 6 et associés respectivement à des canaux radiaux 18 et 19 traversant la paroi latérale dudit four 1 . Les canaux 18 et 19 sont diamétralement opposés , leur axe commun étant sensiblement parallèle à l'axe des billettes cylindriques 12 . Ils ont un même diamètre d'environ 50 mm.Ils débouchent tous deux à l'intérieur du four 1 sensiblement au niveau de la zone d'essai et servent de canaux de visée au dispositif extensométrique 15.

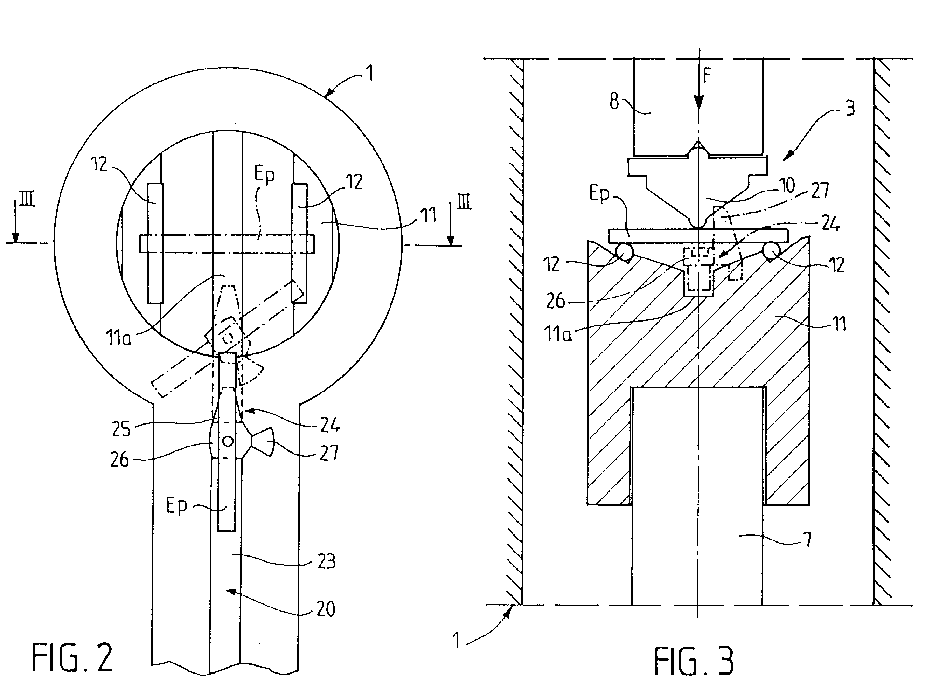

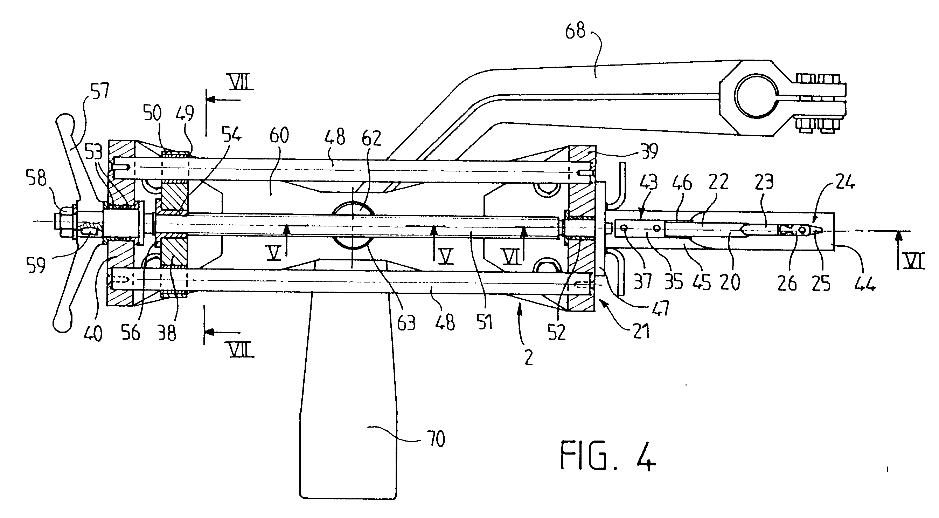

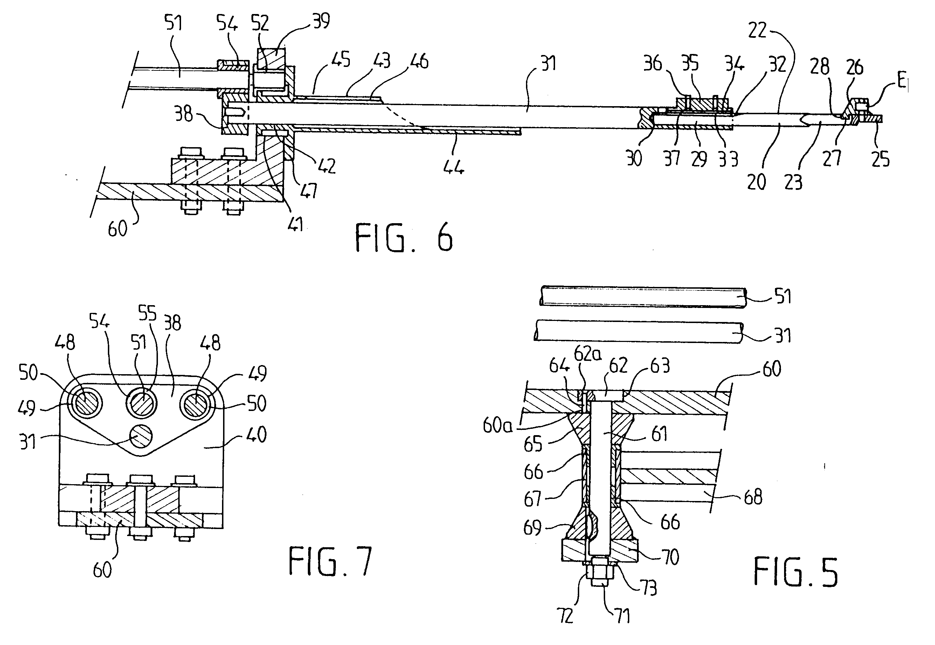

En référence aux figures 4 à 7 ,le dispositif 2 de mise en place d'une éprouvette Eₚ comporte une tige mobile 20 de dépose, montée sur un dispositif de manoeuvre référencé par 21 dans son ensemble . Cette tige 20 a un corps principal 22 sensiblement cylindrique se prolongeant par une partie 23 , qui est cylindrique et de diamètre plus petit. Le diamètre du corps principal 22 est très nettement inférieur au diamètre intérieur du canal 19, de façon à ce que la tige 20 puisse être introduite avec une éprouvette Eₚ dans ledit canal 19. La tige 20 a une longueur sensiblement supérieure au rayon extérieur du four 1, la partie 23 étant destinée à venir s'engager dans une rainure 11a ménagée sur le support 11, entre les billettes 12 et parallèlement à l'axe du canal 19 (voir figure 3). Cette partie 23 est pourvue vers son extrémité libre de moyens porteurs 24 comportant un plateau 25 sur lequel est monté en pivotement , perpendiculairement au plan dudit plateau 25, un élément de dépose 26.

Cet élément de dépose 26 comporte, au droit du plateau 25, une tête de réception destinée à recevoir et à porter une éprouvette Eₚ . L'élément 26 est aussi muni d'un éperon 27 en saillie par rapport à la tête de réception à la fois latéralement et selon une direction sensiblement parallèle à l'axe de pivotement de l'élément de dépose 26 Ledit éperon 27 est associé à un logement 28 ménagé sur la tige mobile 20. Dans une des positions de l'élément 26, l'éperon 27 est partiellement rentré dans ce logement 28 et ne dépasse pas latéralement de la tige mobile 20. Dans cette position, une éprouvette Eₚ portée par la tête de l'élément de dépose 26 s'étend sensiblement perpendiculairement à l'axe de la tige mobile 20. Dans une autre position, qui est une position de déplacement pour les éprouvettes ayant une longueur supérieure à 50 mm, l'éperon 27 est sorti de son logement 28 et est en saillie par rapport à la tige mobile 20. Dans cette position, une éprouvette portée par la tête de l'élément 26 est sensiblement parallèle à l'axe de la tige 20. La tige 20 et les moyens porteurs 24 sont réalisés en matériau céramique ou en alumine, de façon à garantir leur tenue en température lors des opérations répétées d'introduction des éprouvettes.

A son extrémité opposée aux moyens porteurs 24, la tige mobile 20 est terminée par une partie de fixation 29 emboîtée dans un fourreau 30 terminant une canne de transfert 31. Cette partie 29 a une forme qui prolonge sensiblement le corps principal 22 de la tige 20. Elle comporte dans sa longueur une surface plate 32 avec laquelle coopère une clavette plate 33 destinée à se positionner dans un évidement parallélépipédique plat 34 ménagé dans la paroi du fourreau 30. La surface plate 32 et la surface du plateau 25 en regard de l'élément 26,sont sensiblement dans un même plan .

La canne de transfert 31 a une forme cylindrique allongée . La paroi du fourreau 30 qui termine ladite canne 31 est renforcée au-dessus de l'évidement 34 par une nervure 35 aux formes parallélépipédiques . Cette nervure 35 est traversée dans son épaisseur par deux alésages filetés 36 répartis symétriquement sur sa longueur . Ces alésages 36 reçoivent chacun une vis à têton 37 destinée à venir appuyer sur la clavette 33 pour bloquer par serrage la tige 20 dans le fourreau 30.

A son autre extrémité, la canne de transfert 31 est solidarisée par vissage à un palier 38 mobile entre deux paliers fixes disposés en regard , le palier fixe le plus proche du four 1 , ou palier avant, étant référencé par 39, l'autre, ou palier arrière , étant référencé par 40. Le palier mobile 38 est une pièce plate ayant sensiblement une découpe en forme de triangle isocèle aux angles arrondis. L'axe de la canne 31 est sensiblement perpendiculaire audit palier mobile 38 et est centré sur la médiatrice de la base dudit palier , vers le sommet opposé à ladite base. Le palier avant 39 est traversé dans son épaisseur par un trou circulaire 41 dans lequel se loge un manchon 42 ayant un diamètre légèrement supérieur au diamètre de la tige de transfert 31, la paroi externe dudit manchon 42 épousant sensiblement la paroi interne dudit trou 41.La canne de transfert 31 se déplace librement en translation axiale dans ledit manchon 42.

Ce manchon 42 est prolongé au-delà du côté avant du palier avant 39, par une gaine 43 dont la longueur correspond sensiblement à la longueur de la tige mobile 20. Cette gaine 43 sert d'élément protecteur à la tige mobile 20, lorsque celle-ci est en position de repos .Elle a une forme sensiblement cylindrique tubulaire sur sensiblement la moitié arrière 45 de sa longueur, la moitié avant 44 ayant quant à elle une forme de demi-cylindre creux prolongeant le fond de la moitié arrière cylindrique 45 . Cette moitié cylindrique 45 est délimitée, à son extrémité prolongée par la partie 44, par une découpe en biseau. Le plan passant par l'axe de la tige 20 et l'axe de pivotement de l'élément 26 est un plan de symétrie pour la gaine 43. La partie cylindrique 45 comporte, en outre , dans sa longueur une entaille 46, débouchant à une de ses extrémités au niveau de la découpe en biseau et dont la largeur correspond sensiblement à la largeur de la nervure 35 , ladite entaille 46 étant sensiblement en regard de ladite nervure 35. En position de repos de la tige mobile 20, la nervure 35 se loge dans ladite rainure 46, le pan arrière de ladite nervure 35 étant disposé au niveau de la largeur extrême de cette entaille 46 la plus éloignée de la découpe en biseau. La gaine 43 et le manchon 42 sont une même pièce solidarisée au palier avant 39 par fixation par vissage d'une jupe annulaire plate 47 disposée entre ledit manchon 42 et ladite gaine 43, sur la face avant dudit palier avant 39.

Entre les paliers fixes 39 et 40 sont montées deux colonnes cylindriques 48. Les axes de ces colonnes 48 sont parallèles à l'axe de la canne de transfert 31 et sont disposés dans un même plan horizontal au-dessus de celui-ci. Le palier mobile 38 comporte dans son épaisseur deux trous circulaires 49 dans lesquels se logent des bagues 50, dont le diamètre extérieur correspond sensiblement au diamètre intérieur desdits trous 49 et dont le diamètre intérieur est légèrement supérieur au diamètre extérieur des colonnes 48 . Ces deux trous 49 sont sensiblement disposés symétriquement par rapport à la médiatrice de la base de la section du palier mobile 38, vers les coins de ladite base. Les colonnes 48 sont passées dans lesdites bagues 50, le palier 38 coulissant par rapport auxdites colonnes 48, qui lui interdisent tout mouvement de rotation.

Dans le plan desdites colonnes 48 et au milieu entre ces dernières, est tourillonnée, entre les deux paliers fixes 39 et 40 , une vis sans fin 51 de manoeuvre ,dont l'axe est parallèle aux axes des colonnes 48 . Cette vis 51 est montée sur le palier avant 39 dans une bague de centrage 52. Elle traverse le palier arrière 40 par l'intermédiaire de deux bagues de vis 53 montées dans le prolongement l'une de l'autre , chacune dans une demie épaisseur dudit palier arrière 40. Ces bagues 52 et 53 laissent la vis de manoeuvre 51 libre en pivotement sur son axe.

Le filetage de cette vis 51 coopère avec le filetage d'un écrou de manoeuvre 54 emboîté dans un trou 55 ménagé dans l'épaisseur du palier mobile 38 . Cet écrou de manoeuvre 54 est solidarisé audit palier mobile 38 par fixation par vissage de deux ailettes 56 le bordant latéralement sur la paroi arrière dudit palier monile 38. Le trou 55 est centré sur un point de la médiatrice de la base de la découpe du palier 38 .

La vis de manoeuvre 51 est associée, à son extrémité au-delà de la face arrière palier fixe arrière 40, à un volant de manoeuvre 57 qui est solidarisé à ladite vis par l'intermédiaire d'un écrou 58 et d'une goupille 59.

Les deux paliers fixes 39 et 40 sont des plaques fixées par leur base avec laquelle elles forment une équerre, sur une plaque 60 ayant sensiblement une découpe en forme de "papillon". Cette plaque 60 est elle-même montée axialement sur une tige de liaison 61 terminée à une de ses extrémités par une tête 62 qui s'emboîte dans un logement 63 ménagé à la surface supérieure de ladite plaque 60 .Cette tête 62 est destinée à coopérer avec une goupille de positionnement 64 qui, lorsqu'elle est en place, vient se loger partiellement dans un alésage 62a traversant ladite tête 62 dans son épaisseur parallèlement à l'axe de la tige 61 et , partiellement, dans un alésage 60a traversant la plaque support 60 à partir du fond dudit logement 63. Cette plaque support repose elle-même par un cône support 65 , qui lui est solidaire et que traverse axialement le corps de la tige 61 sur deux tourillons 66 , entre lesquels est monté axialement un manchon 67 libre en rotation sur ladite tige 61.Ce manchon 67 est supporté par un bras 68 à l'extrémité duquel est prévu un collier de serrage autour d'une tige porteuse fixe (non représentée)qui est le support du dispositif à manoeuvre 21 et rattachée .Ce bras 68 est un bras coudé s'étendant dans un plan médian sensiblement parallèle au plan de la plaque 60 . Il a une section droite en forme de croix , deux des nervures réalisant ledit bras 68 étant sensiblement disposées dans le plan médian précité.

Le tourillon 66 le plus éloigné de la plaque 60 est lui-même en appui sur un cône support 69 sensiblement identique au cône support 65. Les cônes supports 65 et 69 sont disposés sensiblement symétriquement par rapport au plan médian du bras 68. Le cône 69 est solidaire d'un support 70, qui est le support de la lampe 17. La tige 61 traverse axialement le cône 69. Elle traverse aussi le support 70 dans son épaisseur . Elle se termine au-delà dudit support 70 par une partie filetée 71 coopérant avec un écrou 72 pour maintenir entre une rondelle 73 et la tête 62 l'ensemble constitué du support 70 , du cône 69, du manchon 67, du cône 65 et de la plaque 60 dans l'une ou l'autre de deux positions , dont l'une, représentée sur la figure 4, est la position d'utilisation du dispositif de manoeuvre 21 aligné sur l'axe des canaux 18 et 19 du four 1 , et dont l'autre obtenue par pivotement de 90° de l'ensemble monté pivotant avec la figure 61 dans le manchon 67 du bras 68, est la position d'utilisation de la lampe 17 alors alignée son son support 70 sur l'axe des canaux 18 et 19 du four 1.

On utilise un tel appareillage d'essai avec des prouvettes de longueur supérieure à 50 mm de la façon qui va maintenant être décrite.

Après mise en température du four 1 grâce aux résistances 4, on effectue la succession d'étapes suivantes :
1°)la lampe 17 ayant été dégagée de l'ouverture extérieure du canal de visée 19, par pivotement sur 90° du support 70 autour de l'axe de la tige 61 après desserrement de l'écrou 72,on ressere cet écrou 72 pour bloquer le dispositif dans sa position d'utilisation, et on introduit la tige mobile 20 de dépose dans ledit canal 19 . Pour ce faire, l'opérateur actionne le volant 57 qui entraîne en rotation la vis de manoeuvre 51. Les colonnes 48 interdisant la rotation du palier mobile 38, la vis de manoeuvre 51 tourne dans l'écrou de manoeuvre 54, entraînant en translation le palier mobile 38 , ainsi que la canne de transfert 31 , qui en est solidaire , et la tige 20. L'élément de dépose 26 a été préalablement pivoté sur son axe par rapport au plateau 25 pour que l'éprouvette EP prenne sa position de déplacement dans laquelle elle s'étend parallèlement à l'axe de la tige mobile 20, l'éperon 27 étant en saillie par rapport à ladite tige 20 . De cette façon,l'éprouvette Eₚ est rentrée à l'intérieur du four 1 .
2°)Lorsque l'élément de dépose 26 arrive au niveau du support 11, l'éperon 27 vient buter sur ledit support . Ledit éperon 27 pivote alors sur lui-même pour se ranger dans le logement 28 , puis s'engager avec l'ensemble de ladite tige 20 dans la rainure 11a du support 11. Ceci entraîne automatiquement le pivotement selon un angle de 90° de l'élément de dépose 26 et de l'éprouvette Eₚ au cours de l'avancement de la tige mobile 20 à l'intérieur du four 1.Ladite éprouvette Eₚ se retrouve donc perpendiculaire à la tige mobile 20 et parallèle à sa position d'essai.
3°) Lorsque la canne de transfert 31 et la tige mobile 20 sont en fin de course, le palier mobile 38 étant sensiblement au niveau du palier fixe avant 39 , l'éprouvette Eₚ se trouve exactement au dessus des billettes cylindriques 12. On remonte le support 11 vers ladite éprouvette Eₚ en translatant la traverse mobile 9 vers le haut du bâti 6 . Les billettes 12 viennent alors soulager les moyens porteurs 24 de l'éprouvette Eₚ, qui se trouve ainsi déposée sur l'outillage d'essai 5.
4°) L'utilisateur retire la tige mobile 20 de l'intérieur du four 1 en manoeuvrant le volant 57 dans l'autre sens , les moyens porteurs 24 se retirant dudit four 1 par le canal 19. La tige 20 vient se ranger alors dans la gaine 43 , les moyens porteurs 24 se disposant au niveau de la partie demi-cylindique 44 qui forme le fond de ladite gaine 43 , la nervure 35 coulissant et se rangeant dans l'entaille 46 .
5°) On fait pivoter l'ensemble de la plaque 60 et du support 70 de 90° en sens opposé pour replacer la lampe 17 devant le canal de visée 19 . L'appareillage est ainsi prêt pour l'essai sur l'éprouvette Eₚ.
6°) On effectue l'essai, le poinçon 10 venant mettre en flexion l'éprouvette Eₚ supportée sur ses côtés par les billettes 12 . Les mesures relatives à cet essai sont relevées respectivement par le capteur d'effort 14 et le dispositif extensométrique 15.
7°) On évacue l'éprouvette Eₚ testée. Si lors de l'essai l'éprouvette Eₚ se casse, elle tombe d'elle-même entre la chemise du four 1 et la partie 7 dans un réceptacle 74 prévu à cet effet. L'opérateur n'a alors pas à intervenir. Si l'éprouvette Eₚ ne se casse pas ou si les morceaux tombent sur le support 11, l'opérateur pousse, à l'aide de la tige mobile 20 , l'éprouvette ou ses morceaux pour la (ou les ) faire tomber dans le réceptacle 74.
8°) On recommence un nouveau cycle d'essai.

Il ressort clairement de ce qui précède que le processus d'essai pourrait être totalement automatisé . Une telle automatisation permet d'exécuter des essais au rythme répété d'un essai environ toutes les dix minutes, ce temps pouvant être certainement encore sensiblement diminué.

L'appareillage peut, bien entendu , être aussi utilisé avec des éprouvettes ayant une longueur inférieure à 50 mm, auquel cas il n'est pas nécessaire de faire pivoter lesdites éprouvettes à l'intérieur du four 1, puisqu'elles peuvent être introduites dans le canal 19 dans une position déjà parallèle à leur position d'essai.

L'invention a été ici décrite dans le cadre d'un essai de flexion trois points, mais s'applique aussi à tout autre type d'essai, dès lors que l'essai impose l'introduction de l'éprouvette sans déplacement du four et/ou sans refroidissement des résistances.

## Revendications

1. Procédé de mise en place d'une éprouvette dans un four à haute température renfermant un outillage d'essai (3) comprenant un support (11) d'éprouvette et des moyens complémentaires (10) destinés à agir mécaniquement sur une éprouvette (Eₚ) posée sur ledit support (11) , une paroi latérale dudit four (1) étant traversée dans son épaisseur par un canal (19) débouchant à l'intérieur dudit four (1) , au niveau de la zone d'essai, caractérisé en ce que , après mise en température du four, on effectue la succession d'étapes suivantes :
- introduction d'une éprouvette (Eₚ) à l'intérieur du four (1) par ledit canal (19) à l'aide de moyens porteurs (24) ;
- dépose de ladite éprouvette (Eₚ) sur le support (11) d'éprouvette ;
- retrait des moyens porteurs (24) de l'intérieur du four (1) par ledit canal (19).

2. Procédé selon la revendication 1, caractérisé en ce que dans le cas où le four (1) comporte un canal de visée (19) associé à des moyens optiques (15) d'observation de l'éprouvette (Eₚ), l'éprouvette (Eₚ) est introduite dans le four (1) par ledit canal de visée (19) et est pivotée à l'intérieur du four (1), lesdits moyens optiques (15) étant ensuite positionnés devant l'ouverture extérieure dudit canal de visée (19), après retrait, des moyens porteurs (24)hors de celui-ci.

3. Procédé selon la revendication 2 , caractérisé en ce que l'éprouvette (Eₚ) est pivotée pendant son déplacement à l'intérieur du four (1) vers son support (11).

4. Dispositif de mise en place d'une éprouvette dans un four à haute température renfermant un outillage d'essai (3) comprenant un support (11) d'éprouvette et des moyens complémentaires (10) destinés à agir mécaniquement sur une éprouvette (Eₚ) en place sur ledit support (11) , une paroi latérale dudit four (1),étant traversée dans son épaisseur par un canal (19) débouchant à l'intérieur dudit four (1) au niveau de la zone d'essai, pour la mise en oeuvre du procédé selon l'une quelconque des revendications 1 à 3, caractérisé en ce qu'il comporte une tige mobile (20) de dépose d'éprouvette munie à une de ses extrémités de moyens porteurs (24) propres à recevoir une éprouvette (Eₚ) et à la maintenir en place sur ladite tige (20) dans une position de déplacement où ladite éprouvette (Eₚ) s'étend selon la direction longitudinale de la dite tige (20), ladite tige de dépose (20) étant de dimension telle qu'elle peut être introduite , avec une éprouvette (Eₚ) en position de déplacement , dans le canal (19),pour transporter ladite éprouvette (Eₚ) de l'extérieur vers l'intérieur du four (1).

5. Dispositif selon la revendication 4, caractérisé en ce que pour un four (1) dans lequel l'axe du canal (19) et la direction selon laquelle une éprouvette(Eₚ)s'étend en position déposée sur le support (11) ne sont pas parallèles , il comporte des moyens (11a) de positionnement d'une éprouvette (Eₚ) sur le support, lesdits moyens (11a) coopérant avec les moyens porteurs (24) pour faire pivoter automatiquement à l'intérieur du four (1) une éprouvette (Eₚ)de sa position de déplacement à sa position déposée.

6. Dispositif selon la revendication 5, caractérisé en ce que les moyens porteurs (24) comportent un élément de dépose (26) monté pivotant à l'extrémité de la tige mobile (20) et propre à recevoir une éprouvette (Eₚ),ledit élément de dépose (26) coopérant à l'intérieur du four avec un rail de guidage (11a) l'entraînant en pivotement lors de l'avancée de la tige mobile (20) à l'intérieur du four (1).

7. Dispositif selon la revendication 6, caractérisé en ce que le rail de guidage (11a) est une rainure ménagée sur le support (11) d'éprouvette , l'élément de dépose (26) comportant un éperon (27) destiné à s'engager dans ladite rainure (11a).

8. Dispositif selon la revendication 7, caractérisé en ce que l'éperon (27) en position de déplacement dans le canal (19) est disposé sur le côté de ladite tige mobile (20), en regard d'une paroi de l'outillage d'essai (3) contre laquelle il vient buter avant de se positionner par pivotement en regard de la rainure (11a), faisant ainsi pivoter l'élément de dépose (26).

9. Dispositif selon la revendication 8, caractérisé en ce que l'éperon (27) est en saillie par rapport à l'élément de dépose (26), à la fois latéralement et dans une direction parallèle à la direction de l'axe de pivotement dudit élément de dépose (26) et s'escamote dans un logement (28) ménagé sur la tige (20), à l'entrée dans la rainure (11a).

10. Dispositif selon l'une quelconque des revendications 5 à 9, caractérisé en ce que les moyens de positionnement comprennent également des moyens de translation (9) du support d'éprouvette (11) permettant de modifier sa position par rapport à l'axe du canal (19).

11. Dispositif selon l'une quelconque des revendications 4 à 9, caractérisé en ce que la tige mobile (20) et/ou les moyens porteurs (24) sont en matériau céramique et/ou en alumine.

12. Dispositif selon l'une quelconque des revendications 4 à 11, caractérisé en ce qu'il est associé à des moyens optiques d'observation (15), et en ce que le canal (19) dans lequel se déplace la tige mobile (20) sert de canal de visée auxdits moyens d'observation (15) .

13. Dispositif selon la revendication 12, caractérisé en ce que le dispositif optique (15) comporte une lampe (17) qui éclaire de l'extérieur du four (1) la zone d'essai par l'intermédiaire du canal (19).

14. Dispositif selon l'une des revendications 4 à 13, caractérisé en ce que la tige mobile (20) est actionnée par un dispositif de manoeuvre (21) monté sur un support (68) permettant son positionnement en regard du canal (19).

15. Dispositif selon la revendication 13, ou 14, caractérisé en ce que le support (68) du dispositif de manoeuvre (21) porte également un support(70) de la lampe (17).

16. Dispositif selon la revendication 15,caractérisé en ce que la lampe (17) ,son support (70) et le dispositif de manoeuvre (21) sont montés pivotants sur un bras (68) de sorte que leur déplacement permet d'écarter ladite lampe (17) de l'ouverture extérieure du canal (19) pour y introduire la tige mobile (20).

17. Dispositif selon l'une des revendications 14 à 16 , caractérisé en ce que la tige mobile (20) est entraînée en translation par la coopération des filetages d'une vis (51) et d'un écrou (54).

18. Dispositif selon la revendication 17 , caractérisé en ce qu'il comporte un palier mobile (38) solidaire de l'écrou de manoeuvre (54) , et une vis de manoeuvre (51) qui est une vis tourillonnée entre deux paliers (39, 40) fixes sur une plaque support (60), du dispositif de manoeuvre (21)et dont la rotation commande la translation du palier mobile (38) guidée le long d'au moins une colonne (48) fixe par rapport à la plaque support (60) et parallèle à la vis (51).

19. Dispositif selon la revendication 18, caractérisé en ce que la rotation de la vis de manoeuvre (51) est commandée par un volant de manoeuvre (57).

20. Dispositif selon l'une des revendications 17 à 19 , caractérisé en ce que le palier mobile (38) est solidarisé à une canne de transfert (31) s'étendant du côté dudit palier mobile (38) destiné à être le plus proche du four (1), la tige mobile (20) étant montée sur ladite canne de transfert (31) vers l'extrémité de celle-ci la plus éloignée dudit palier (38).

21. Dispositif selon la revendication 20, caractérisé en ce que la tige mobile (20) est emboitée à son extrémité opposée aux moyens porteurs(24) dans un fourreau (30) terminant la canne de transfert (31).

22. Dispositif selon l'une des revendications 18 à 21 , caractérisé en ce que la canne de transfert (31) débouche au-delà du palier fixe (39) destiné à être le plus proche du four (1), dans une gaine (43) de protection à l'intérieur de laquelle est rangée la tige mobile (20) en position de repos.

23. Four à haute température renfermant un outillage d'essai (3) dont une paroi latérale est traversée dans son épaisseur par au moins un canal débouchant à l'intérieur du four,caractérisé en ce qu'il est associé à un dispositif de mise en place d'une éprouvette selon l'une des revendications 5 à 22.

24. Four selon la revendication 23, caractérisé en ce qu'il est tubulaire.

25. Four selon l'une quelconque des revendications 23 ou 24 , caractérisé en ce que l'outillage d'essai (3) est un outillage pour tester une éprouvette en flexion trois points.

## Patentansprüche

1. Verfahren zum Einsetzen einer Probe in einen Hochtemperaturofen, der eine Versuchsanordnung (3) mit einem Probenträger (11) und komplementären Mitteln (10) umschließt, die dazu bestimmt sind, mechanisch auf eine auf den Träger (11) gesetzte Probe (Eₚ) einzuwirken, wobei eine Seitenwand des Ofens (1) in ihrer Dicke von einem Kanal (19) durchsetzt wird, der ins Innere des Ofens (1) auf Höhe der Versuchszone mündet, dadurch gekennzeichnet, daß nach dem Anheizen des Ofens nacheinander die folgenden Schritte durchgeführt werden:
- Einführen einer Probe (Eₚ) ins Innere des Ofens (1) durch den Kanal (19) mit Hilfe von Haltemitteln (24);
- Absetzen der Probe (Eₚ) auf dem Probenträger (11);
- Zurückziehen der Haltemittel (24) aus dem Inneren des Ofens (1) durch den Kanal (19).

2. Verfahren nach Anspruch 1, dadurch gekennzeichnet, daß in dem Falle, in dem der Ofen (1) einen Beobachtungskanal (19) aufweist, dem optische Mittel (15) zum Betrachten der Probe (Eₚ zugeordnet sind,
die Probe (Eₚ) durch den Beobachtungskanal (19) in den Ofen (1) eingeführt und im Inneren des Ofens (1) geschwenkt wird, wobei die optischen Mittel (15) dann, nach dem Zurückziehen der Haltemittel (24) daraus,vor der äußeren Öffnung des Beobachtungskanals (19) positioniert werden.

3. Verfahren nach Anspruch 2 , dadurch gekennzeichnet, daß die Probe (Eₚ) während ihrer Verschiebung im Inneren des Ofens (1) zu ihrem Träger (11) geschwenkt wird.

4. Vorrichtung zum Einsetzen einer Probe in einen Hochtemperaturofen, der eine Versuchsanordnung (3) mit einem Probenträger (11) und komplementärenMitteln(10) umschließt, die dazu bestimmt sind, mechanisch auf eine, an ihrem Platz auf dem Träger befindliche Probe (Eₚ) einzuwirken, wobei eine Seitenwand des Ofens (1) in ihrer Dicke von einem Kanal (19) durchsetzt wird, der ins Innere des Ofens (1) auf Höhe der Versuchszone mündet, zur Durchführung des Verfahrens nach einem der Ansprüche 1 bis 3, dadurch gekennzeichnet, daß sie eine bewegliche Stange (20) zum Absetzen der Probe aufweist, die an einem ihrer Enden mit Haltemitteln (24) versehen ist, die dazu geeignet sind, eine Probe (Eₚ) aufzunehmen und an der Stange (20) in einer Verschiebungsposition zu halten, in der sich die Probe (Eₚ) entlang der Längsrichtung der Stange (20) erstreckt, wobei die Absetzstange (20) so dimenisioniert ist, daß sie mit einer Probe (Eₚ) in Verschiebungsposition in den Kanal (19) eingeführt werden kann, um die Probe (Eₚ) von außen ins Innere des Ofens (1) zu transportieren.

5. Vorrichtung nach Anspruch 4, dadurch gekennzeichnet, daß sie für einen Ofen (1), in dem die Achse des Kanals (19) und die Richtung, in der sich eine Probe (Eₚ) in der auf dem Träger (11) abgesetzten Position erstreckt, nicht parallel sind, Mittel (lla) zum Positionieren einer Probe (Eₚ) auf dem Träger aufweist, wobei die Mittel (lla) mit Haltemitteln (24) zusammenwirken, um automatisch im Inneren des Ofens (1) eine Probe (Eₚ) aus ihrer Verschiebungsposition in ihre abgesetzte Position zu verschwenken.

6. Vorrichtung nach Anspruch 5, dadurch gekennzeichnet, daß die Haltemittel (24) ein Absetzelement (26) aufweisen, das schwenkbar am Ende der beweglichen Stange (20) angebracht und dafür geeignet ist, eine Probe (Eₚ) aufzunehmen, wobei das Absetzelement (26) im Inneren des Ofens mit einer Führungsschiene (11a) zusammenwirkt, die es beim Vorschub der beweglichen Stange (20) im Inneren des Ofens (1) in Verschwenkung antreibt.

7. Vorrichtung nach Anspruch 6, dadurch gekennzeichnet, daß die Führungsschiene (11a) eine in dem Probenträger (11) vorgesehene Nut ist, wobei das Absetzelement (26) einen Sporn (27) aufweist, der dazu bestimmt ist, in die Nut (11a) einzugreifen.

8. Vorrichtung nach Anspruch 7, dadurch gekennzeichnet, daß der Sporn (27) in der Verschiebungsrichung in dem Kanal (19) an der Seite der beweglichen Stange (20), gegenüber einer Wand der Versuchsanordnung (3) angeordnet ist, gegen die er in Anlage gelangt, bevor er sich durch Verschwenkung gegenüber der Nut (11a) positioniert und so das Absetzelement (26) schwenkt.

9. Vorrichtung nach Anspruch 8, dadurch gekennzeichnet, daß der Sporn (27) bezüglich des Absetzelements (26) sowohl seitlich als auch in einer Richtung parallel zu der Richtung der Schwenkachse des Absetzelements (26) hervorsteht und sich beim Eintritt in die Nut (lla) in eine an der Stange (20) vorgesehenen Aufnahme (28) zurückzieht.

10. Vorrichtung nach einem der Ansprüche 5 bis 9, dadurch gekennzeichnet, daß die Positionierungsmittel auch Translationsmittel (9) für den Probenträger (11) aufweisen, die es ermöglichen, seine Position bezüglich der Achse des Kanals (19) zu verändern.

11. Vorrichtung nach einem der Ansprüche 4 bis 9, dadurch gekennzeichnet, daß die bewegliche Stange (20) und/oder die Haltemittel (24) aus einem Keramikmaterial und/oder aus Tonerde sind.

12. Vorrichtung nach einem der Ansprüche 4 bis 11, dadurch gekennzeichnet, daß ihr optische Betrachtungsmittel (15) zugeordnet sind und der Kanal (19), in dem sich die bewegliche Stange (20) verschiebt, als Beobachtungskanal für die Betrachtungsmittel (15) dient.

13. Vorrichtung nach Anspruch 12, dadurch gekennzeichnet, daß die optische Einrichtung (15) eine Lampe (17) aufweist, die von außerhalb des Ofens (1) über den Kanal (19) die Versuchszone ausleuchtet.

14. Vorrichtung nach einem der Ansprüche 4 bis 13, dadurch gekennzeichnet, daß die bewegliche Stange (20) durch eine Handhabungseinrichtung (21) betätigt wird, die an einem Träger (68) angebracht ist und seine Positionierung gegenüber dem Kanal (19) ermöglicht.

15. Vorrichtung nach Anspruch 13 oder 14, dadurch gekennzeichnet, daß der Träger (68) der Handhabungseinrichtung (21) auch einen Träger (70) für die Lampe (17) trägt.

16. Vorrichtung nach Anspruch 15, dadurch gekennzeichnet, daß die Lampe (17), ihr Träger (70) und die Handhabungseinrichtung (21) schwenkbar so an einem Arm (68) angebracht sind, daß ihre Verschiebung das Entfernen der Lampe (17) von der äußeren Öffnung des Kanals (19) ermöglicht, um dort die bewegliche Stange (20) einzuführen.

17. Vorrichtung nach einem der Ansprüche 14 bis 16, dadurch gekennzeichnet, daß die bewegliche Stange (20) durch das Zusammenwirken der Gewinde einer Schraube (51) und einer Mutter (54) in Translation angetrieben wird.

18. Vorrichtung nach Anspruch 17, dadurch gekennzeichnet, daß sie ein mit der Handhabungsmutter (54) fest verbundenes, bewegliches Lager (38) sowie eine Handhabungsschraube (51) aufweist, die eine durch Laufzapfen zwischen zwei festen Lagern (39, 40) an einer Trägerplatte (60) der Handhabungseinrichtung (21) rotierende Schraube ist, und deren Drehung die geführte Translation des beweglichen Lagers (38) längs wenigstens einer bezüglich der Trägerplatte (60) festen und zu der Schraube (51) parallelen Säule (48) steuert.

19. Vorrichtung nach Anspruch 18, dadurch gekennzeichnet, daß die Drehung der Handhabungsschraube (51) durch ein Handhabungsrad (57) gesteuert wird.

20. Vorrichtung nach einem der Ansprüche 17 bis 19, dadurch gekennzeichnet, daß das bewegliche Lager (38) mit einem Transportstab (31) fest verbunden ist, der sich an der Seite des beweglichen Lagers (38) erstreckt, die dazu bestimmt ist, dem Ofen (1) am nächsten zu sein, wobei die bewegliche Stange an dem Transportstab (31) etwa an dessen Ende angebracht ist, das von dem Lager (38) am weitesten entfernt ist.

21. Vorrichtung nach Anspruch 20, dadurch gekennzeichnet, daß die bewegliche Stange (20) an ihrem den Haltemitteln (24) entgegengesetzten Ende in eine Gleithülse (30) eingesetzt ist, die den Transportstab (31) abschließt.

22. Vorrichtung nach einem der Ansprüche 18 bis 21, dadurch gekennzeichnet, daß der Transportstab (31) jenseits des festen Lagers (39), das dazu bestimmt ist, dem Ofen (1) am nächsten zu sein, in eine Schutzhülse (43) mündet, in deren Inneren die bewegliche Stange (20) in der Ruhestellung untergebracht ist.

23. Hochtemperaturofen, der eine Versuchsanordnung (3) umschließt und dessen eine Seitenwand in ihrer Dicke von wenigstens einem Kanal durchsetzt wird, der in das Innere des Ofens mündet, dadurch gekennzeichnet, daß ihm eine Vorrichtung zum Einsetzen einer Probe nach einem der Ansprüche 5 bis 22 zugeordnet ist.

24. Ofen nach Anspruch 23, dadurch gekennzeichnet, daß er rohrförmig ist.

25. Ofen nach einem der Ansprüche 23 oder 24, dadurch gekennzeichnet, daß die Versuchsanordnung (3) eine Anordnung zur Durchführung eines Dreipunktbiegetests an einer Probe ist.

## Claims

1. Method for installing a test-piece in a high-temperature oven enclosing test tooling (3) comprising a test-piece support (11) and complementary means (10) intended to act mechanically on a test-piece (Eₚ) placed on the said support (11), a lateral wall of the said oven (1) being traversed in its thickness by a channel (19) opening up inside the said oven (1), level with the test zone, characterised in that after bringing the oven up to temperature, the succession of following steps is carried out:
- introduction of the test-piece (Eₚ) inside the oven (1) via the said channel (19) with the aid of carrying means (24);
- depositing the said test-piece (Eₚ) on the test-piece support (11);
- withdrawing the carrying means (24) from inside the oven (1) via the said channel (19).

2. Method according to Claim 1, characterised in that, in the event of the oven (1) including a viewing channel (19) associated with optical means (15) for observing the test-piece (Eₚ),
- the test-piece (Eₚ) is introduced into the oven (1) via the said viewing channel (19) and is pivoted inside the oven (1), said optical means (15) then being positioned in front of the external opening of the said viewing channel (19) after withdrawing the carrier means (24) out the latter.

3. Method according to Claim 2, characterised in that the test-piece (Eₚ) is pivoted during its movement inside the oven (1) towards its support (11).

4. Device for positioning a test-piece in a high-temperature oven enclosing test tooling (3) comprising a test-piece support (11) and complementary means (10) intended to act mechanically on a test-piece (Eₚ) in place on the said support (11), a lateral wall of the said oven (1) being traversed in its thickness by a channel (19) opening up inside the said oven (1) level with the test zone for implementing the method according to any one of Claims 1 to 3, characterised in that it includes a movable rod (20) for depositing the test-piece, the rod being provided at one of its ends with carrying means (24) suitable for receiving the test-piece (Eₚ) and for keeping it in place on the said rod (20) in a displacement position in which the said test-piece (Eₚ) extends in the longitudinal direction of the said rod (20), the said depositing rod (20) being of a size such that it can be introduced, with a test-piece (Eₚ) in the displacement position, in the channel (19) in order to transport the said test-piece (Eₚ) from the outside towards the inside of the oven (1).

5. Device according to Claim 4, characterised in that, for an oven (1) in which the axis of the channel (19) and the direction in which a test-piece (Eₚ) extends in position deposited on the support (11) are not parallel, it includes means (11a) for positioning a test-piece (Eₚ) on the support, the said means (11a) interacting with the carrying means (24) in order to make a test-piece (Eₚ) pivot automatically inside the oven (1) from its displacement position to its deposited position.

6. Device according to Claim 5, characterised in that the carrying means (24) include a depositing element (26) mounted so as to pivot at the end of the movable rod (20) and capable of receiving a test-piece (Eₚ), the said depositing element (26) interacting inside the oven with a guide rail (11a) driving it in pivoting as the movable rod (20) advances inside the oven (1).

7. Device according to Claim 6, characterised in that the guide rail (11a) is a groove made on the test-piece support (11), the depositing element (26) including a spur (27) intended to engage in the said groove (11a).

8. Device according to Claim 7, characterised in that the spur (27) in the position for displacement inside the channel (19) is arranged on the side of the said movable rod (20) opposite a wall of the test tooling (3) against which it abuts before becoming positioned by pivoting opposite the groove (11a), thus making the depositing element (26) pivot.

9. Device according to Claim 8, characterised in that the spur (27) projects with respect to the depositing element (26), both laterally and in a direction which is parallel to the direction of the axis of pivoting of the said depositing element (26) and retracts into a housing (28) made on the rod (20), upon entering the groove (11a).

10. Device according to any one of Claims 5 to 9, characterised in that the positioning means also comprise means (9) for translating the test-piece support (11), the means making it possible to change its position with respect to the axis of the channel (19).

11. Device according to any one of Claims 4 to 9, characterised in that the movable rod (20) and/or the carrying means (24) are made from a ceramic material and/or alumina.

12. Device according to any one of Claims 4 to 11, characterised in that it is associated with optical observation means (15), and in that the channel (19) in which the movable rod (20) is displaced, acts as a viewing channel for the said observation means (15).

13. Device according to Claim 12, characterised in that the optical device (15) includes a light (17) which illuminates the test zone from outside the oven (1) by means of the channel (19).

14. Device according to one of Claims 4 to 13, characterised in that the movable rod (20) is actuated by a manoeuvring device (21) mounted on a support (68) allowing it to be positioned opposite the channel (19).

15. Device according to Claim 13 or 14, characterised in that the support (68) of the manoeuvring device (21) also carries a support (70) for the light (17).

16. Device according to Claim 15, characterised in that the light (17), its support (70) and the manoeuvring device (21) are mounted so as to pivot on an arm (68) so that their displacement makes it possible to move the said light (17) away from the external opening of the channel (19) in order to insert the movable rod (20) therein.

17. Device according to one of Claims 14 to 16, characterised in that the movable rod (20) is driven in translation by the interaction of the screw threads of a screw (51) and of a nut (54).

18. Device according to Claim 17, characterised in that it includes a movable bearing (38) integral with the manoeuvring nut (54), and a manoeuvring screw (51) which is a screw mounted on journals between two bearings (39, 40) fixed to a support plate (60) of the manoeuvring device (21) and the rotation of which commands the guided translation of the movable bearing (38) along at least one column (48) which is fixed with respect to the support plate (60) and parallel to the screw (51).

19. Device according to Claim 18, characterised in that the rotation of the manoeuvring screw (51) is commanded by a handwheel (57).

20. Device according to one of Claims 17 to 19, characterised in that the movable bearing (38) is integral with a transfer rod (31) extending from that side of the said movable bearing (38) which is intended to be closest to the oven (1), the movable rod (20) being mounted on the said transfer rod (31) towards that end of the latter which is furthest from the said bearing (38).

21. Device according to Claim 20, characterised in that the movable rod (20) is fitted at its end opposite the carrying means (24) into a sheath (30) ending the transfer rod (31).

22. Device according to one of Claims 18 to 21, characterised in that the transfer rod (31) opens out beyond the fixed bearing (39) intended to be closest to the oven (1) in a protection sleeve (43) inside which the movable rod (20) is stored in the rest position.

23. High-temperature oven enclosing test tooling (3) one lateral wall of which is traversed in its thickness by at least one channel opening out inside the oven, characterised in that it is associated with a device for installing a test-piece according to one of Claims 5 to 22.

24. Oven according to Claim 23, characterised in that it is tubular.

25. Oven according to either one of Claims 23 and 24, characterised in that the test tooling (3) is tooling for three-point testing a test-piece in bending.
